# DEMANDE DE BREVET EUROPEEN

(11) **EP 2 672 211 A1**
(43) Date de publication de la demande: **11.12.2013**
(21) Numéro de dépôt: 12290190.3
(22) Date de dépôt: 08.06.2012
(51) Int. Cl.: F26B 3/28, F26B 17/00, F26B 25/10

(54) **Dispositif pour sécher de la biomasse**

(71) Demandeur: Manufacture à Besançon SARL, 25000 Besançon (FR)
(72) Inventeur: Rauch, Winfrid, 25115 Pouilly les Vignes (FR)

(57) **Abrégé**

Le dispositif selon l'invention permet de diminuer les coûts du séchage. Il comporte en effet selon une première caractéristique un convoyeur à fond mouvant (4) se constituant d'une structure métallique. Ce fond mouvant est composé de lattes longitudinales (22), des tôles d'étanchéité (23), des traverses (21) et des vérins (28, 29).

Des sondes (15) mesurent la température et l'humidité de la biomasse.

Selon les résultats des mesures, le fond mouvant est programmé d'avancer.

Ainsi, l'étalage et l'avancement de la biomasse à sécher sont automatisés.

## Description

La présente invention concerne un dispositif pour sécher des produits agro-alimentaires et de la biomasse en général, autrement dit de la matière contenant au moins en partie de l'organique se constituant partiellement de l'eau, et d'autres produits humides.

Le séchage de la biomasse est effectué traditionnellement dans les serres à l'aide d'un étalage manuel ou mécanisé. Le soleil suffit pour sécher la matière étalée à une couche fine. Selon la hauteur de couche, il faut retourner la biomasse pour bien effectuer le séchage. Après séchage, les produits sont ramassés à l'aide d'un engin ou à la main.

Une deuxième technique utilisée consiste dans l'utilisation de l'air chaud créé par un brûleur. Cet air est canalisé et envoyé vers la matière à sécher. La présentation de la biomasse est effectuée soit dans un trommel dont la rotation permet une bonne répartition et un avancement en continu soit par un convoyeur à bande à plusieurs étages permettant que la biomasse circule devant l'air chaud.

Le dispositif selon l'invention permet de diminuer les coûts du séchage. Il comporte en effet selon une première caractéristique un convoyeur à fond mouvant (4) se constituant d'une structure métallique. Ce fond mouvant est composé de lattes longitudinales (22), des tôles d'étanchéité (23), des traverses (21) et des vérins (28,29).

Des sondes (15) mesurent la température et l'humidité de la biomasse.

Selon les résultats des mesures, le fond mouvant est programmé d'avancer.

Ainsi, l'étalage et l'avancement de la biomasse à sécher sont automatisés.

Le dispositif selon l'invention comporte selon une deuxième caractéristique un corps entièrement en acier ou en métal adapté.

Les traverses ne sont pas constituées de parties en plastique telles que possèdent les fonds mouvants classiques mais sont entièrement en métal.

Les lattes en métal permettent l'avancement des produits et la transmission de la chaleur.

Ainsi, elles agissent en plaque chauffante que l'utilisateur peut préchauffer en exposant le fond mouvant avant l'étalage de la biomasse.

Les vérins permettent la transmission d'une force pneumatique, électrique ou hydraulique. Selon le degré de séchage le fond mouvant avance.

Idéalement, l'énergie pour cet avancement mélanique est foumie par des panneaux photovoltaïques, car l'intensité du rayonnement solaire permet un séchage rapide et une captation d'électricité.

Ces panneaux alimentent une batterie intégrée dans l'armoire électrique (2) de la machine. Ainsi, le procédé et son alimentation énergétique sont accouplés naturellement.

Un tel fond mouvant est idéalement peint en noir ou d'une peinture absorbant la radiation solaire facilement.

Il comporte selon une troisième caractéristique une configuration superposée à plusieurs étages (31, 32, 33).

Ainsi, la biomasse est retournée à chaque niveau pour descendre au fur et à mesure au niveau le plus bas par jetées (35, 36).

De cette manière, la machine réduit la surface d'étalage nécessaire de la biomasse.

Il comporte selon une quatrième caractéristique un réservoir (1) permettant une alimentation en continu et de façon dosée du fond mouvant.

Il comporte selon une quatrième caractéristique un chauffage ou brûleur d'air chaud afin d'apporter une source d'énergie supplémentaire.

L'air chaud est soufflé dans la chambre du fond mouvant à l'aide de buses pneumatiques (34). Ainsi, le sécheur devient hybride, autrement dit capable d'être alimenté par deux sources d'énergie.

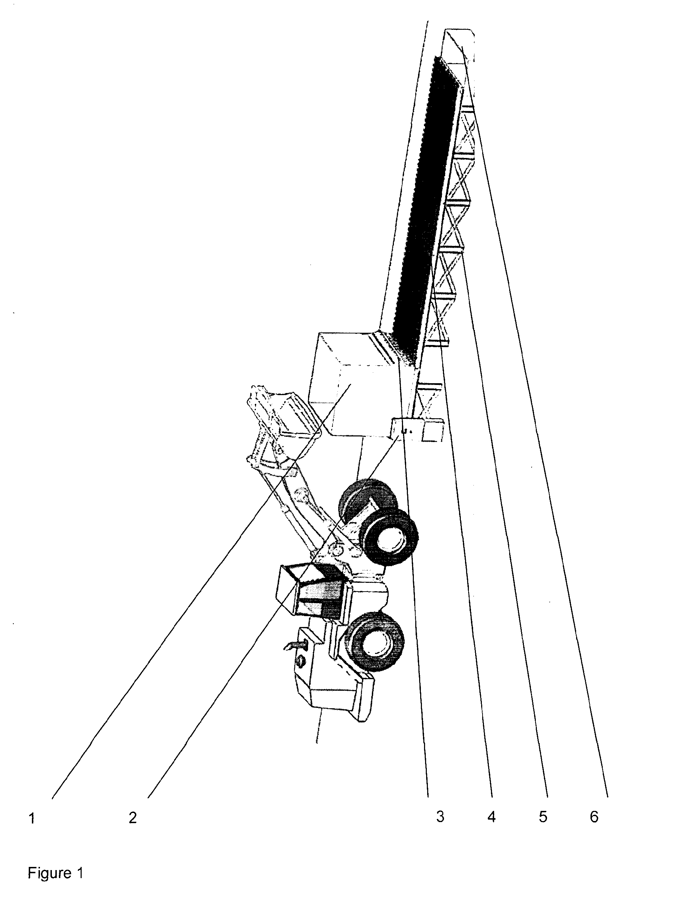

La figure 1 représente une vue de côté montrant le réservoir d'alimentation (1), l'armoire électrique (2), le tambour de dosage (3), le fond mouvant métallique (4), le support du fond mouvant (5) et le bac de réception en aval (6).

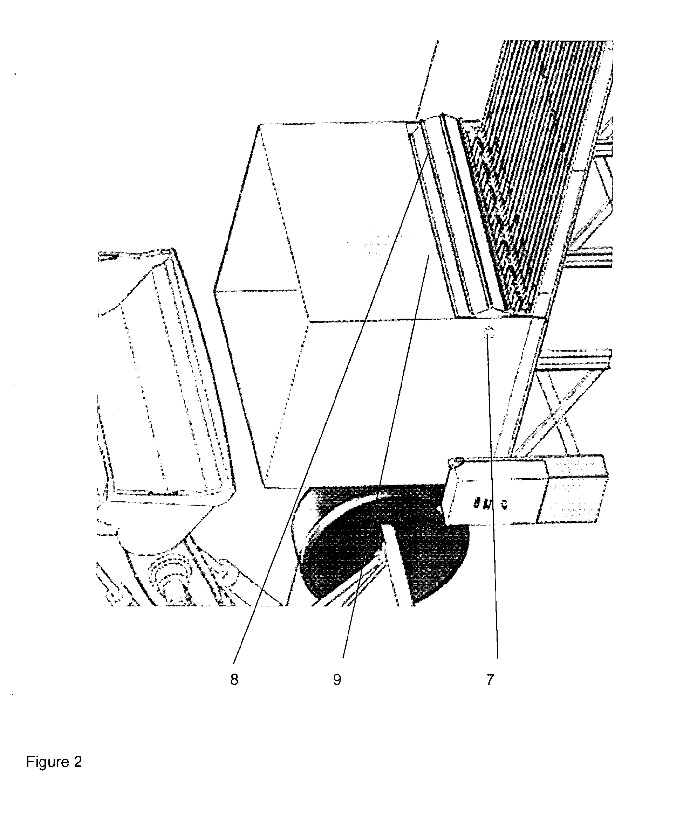

La figure 2 montre le détail du réservoir d'alimentation, notamment l'axe du tambour (7), les dents écrêteuses du tambour (8) et la paroi amovible au dessus du tambour (9).

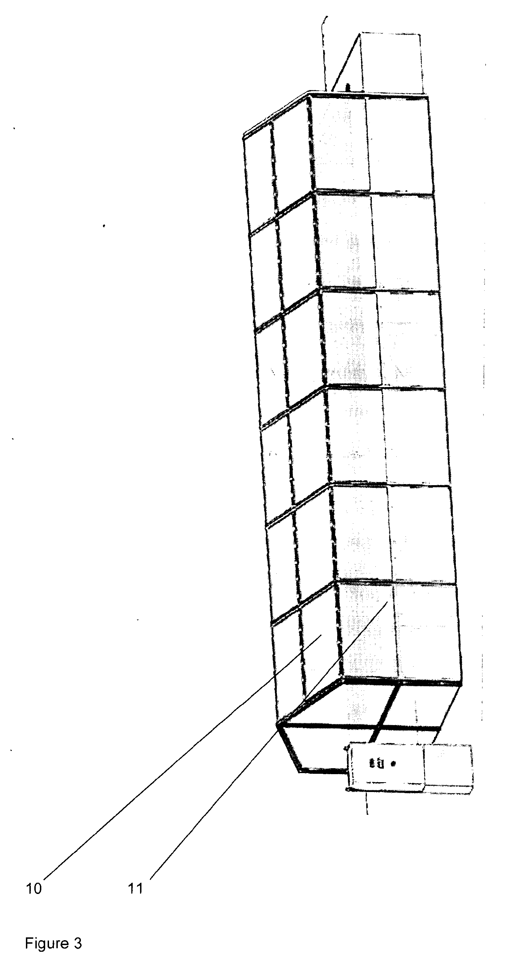

La figure 3 représente la machine avec la serre (10) et l'étanchéité latérale (11) entre le haut de la serre et la partie basse de la serre.

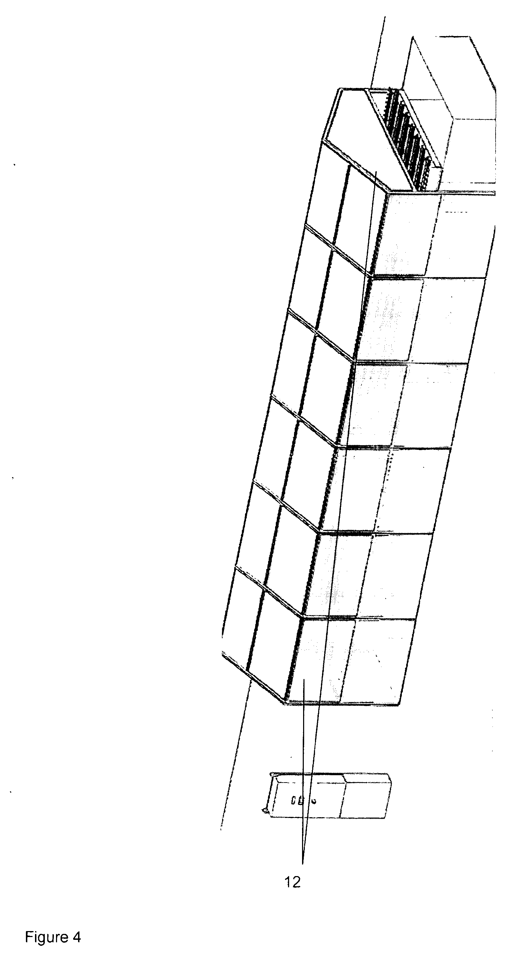

La figure 4 montre la façade souple (12) de la serre en caoutchouc permettant une étanchéité vers l'extérieur.

La ventilation (13), la récupération latérale du condensat (14) et les sondes (15) de température et d'humidité ne sont pas représentées.

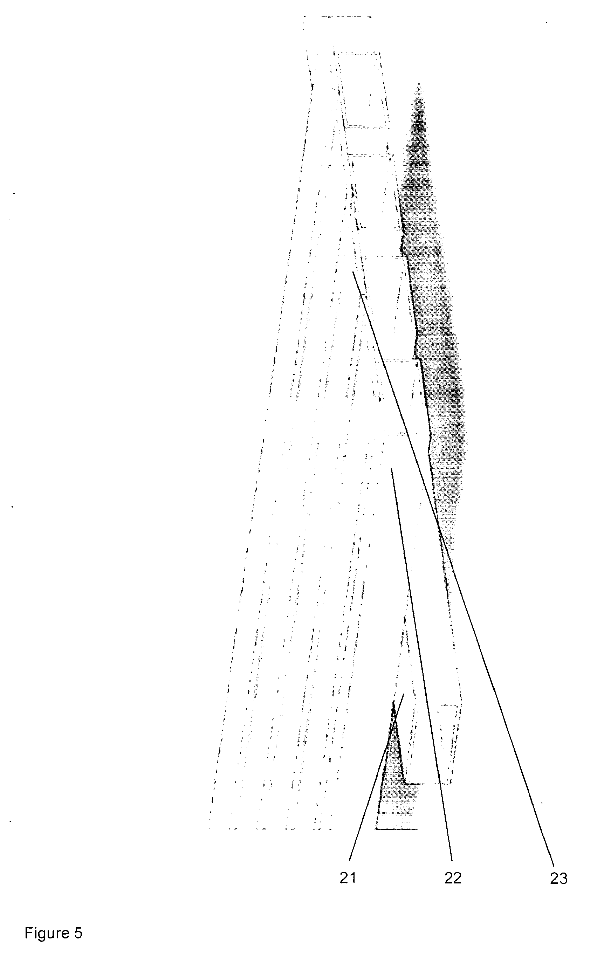

La figure 5 montre un détail du fond mouvant, notamment la traverse de support (21) en profilé fermé, les lattes (22) en profilé fermé et les tôles de recouvrement (23) vissées sur les lattes.

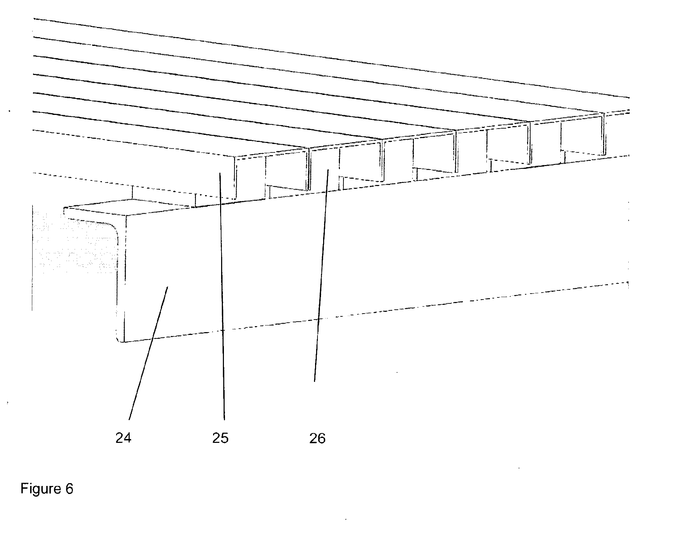

La figure 6 montre la variante du détail précédent, avec des profilés ouverts à l'exemple de la traverse (24) en cronière, la latte en tôle pliée (25) et le guidage intérieur (26).

Les tôles de recouvrement (27) de cette variante, la traverse (28) de transmission de force vers le vérin correspondant, et la fixation de vérin (29) ne sont pas représentées.

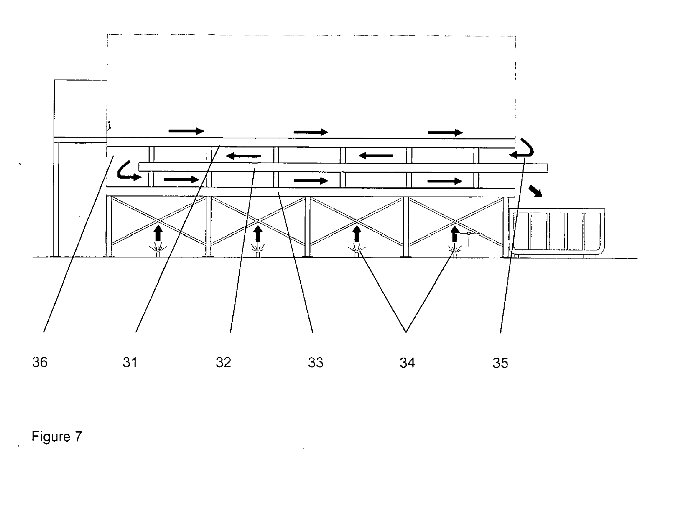

Le figure 7 montre la configuration en cascades. Les trois fonds mouvants (31, 32, 33) sont superposés se trouvant au dessus des buses de soufflage d'air chaud (34), les fonds mouvants possédant des jetées (35, 36) permettant le retournement de la biomasse.

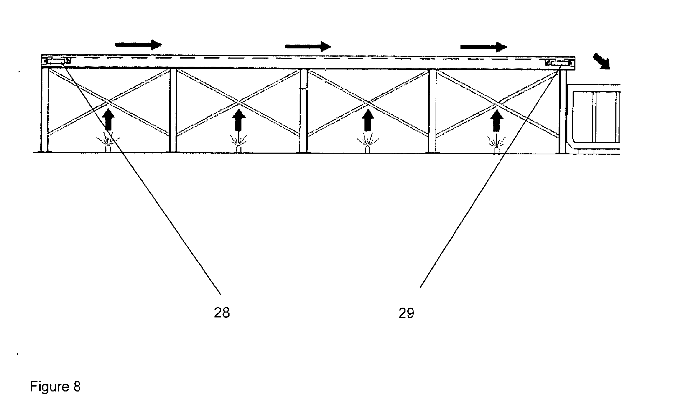

La figure 8 montre la configuration d'un groupe de trois vérins vers l'arrière (28) et de trois vérins vers l'avant (29).

En référence à ces dessins, le dispositif comporte un fond mouvant métallique qui est composé de traverse de soutien (21), des lattes (22) et des tôles de recouvrement (23).

Alternativement, les profilés fermés peuvent être substitués par des profilés ouverts (24, 25, 26). Des vérins situés vers l'avant (29) et vers l'arrière (28) donnent un cycle de mouvement au fond mouvant.

D'abord, les vérins vers l'avant tire l'ensemble des lattes vers l'avant.

Toutes les lattes du fond mouvant avancent ensemble en transportant la matière vers le bac de réception en aval.

Après, chaque vérin est relié à un groupe de lattes.

Ainsi, à chaque mouvement vers l'arrière un tiers de lattes recule.

Le groupe de vérins situé à l'arrière permet de tirer les lattes vers l'arrière.

Cela est réalisé trois fois, l'un vérin après l'autre.

Les deux groupes de vérins vers l'avant et vers l'arrière permettent que les lattes ne soient sollicitées que dans le sens de la traction.

L'alimentation de la machine en biomasse peut être effectuée par un engin à godet remplissant le réservoir de stock tampon (1).

La biomasse sèche tombe dans un bac (6) par effet gravitaire obtenue par un support (5).

Un tambour de dosage (3) permet un étalage selon les souhaits de l'exploitant.

Son axe (7) est vissé dans la structure du réservoir (1) et peut être modifié en hauteur. Pour cela, la paroi (9) est amovible et également modifiable en hauteur.

Le tambour possède des dents écrêteuses (8) qui permettent le dosage, l'étalage et l'écrêtage d'une masse de produits compacts.

La serre vitrée (10) permet l'intrusion des rayons solaires.

L'étanchéité (11) sur les côtés du fond mouvant évite que les produits humides tombent du fond mouvant ou l'air chaud, venant du bas, monte directement en haut.

L'étanchéité faciale (12) de la serre permet que l'air chaud accumulé dans la serre ne soit pas sorti librement à l'extérieur. Cette étanchéité est réalisée par une bavette en caoutchouc ou en plastique, raclant sur la biomasse sèche.

## Revendications

1. Dispositif pour sécher de la biomasse avec un fond mouvant d'une structure métallique **caractérisé par le fait qu'**il comporte des lattes longitudinales (22), des tôles d'étanchéité (23), des traverses de soutien (21) et des vérins (28, 29). Le fond mouvant avance selon les mesures effectuées par des sondes (15) et sèche la biomasse ainsi de façon programmée.

2. Dispositif selon la revendication 1 caractérisé en ce les éléments (22, 23) en profilé fermé sont remplacés par des éléments en profilés ouverts, notamment des cornières (24) et des tôles pliées (25) comportant un guidage intérieur (26).

3. Dispositif selon la revendication 1 **caractérisé en ce que** l'ensemble des parties constituantes est en métal.

4. Dispositif selon la revendication 1 **caractérisé en ce qu'**un l'ensemble des parties constituantes est en acier.

5. Dispositif selon la revendication 1 **caractérisé en ce que** le fond mouvant est peint en noir.

6. Dispositif selon la revendication 1 **caractérisé en ce que** l'énergie nécessaire est fournie par des panneaux photovoltaïques et stockée en batterie intégrée dans l'armoire électrique (2) de la machine.

7. Dispositif selon la revendication 1 **caractérisé en ce que** plusieurs fonds mouvants sont superposés afin de retourner la couche de biomasse et de réduire la surface nécessaire de stockage.

8. Dispositif selon la revendication 1 **caractérisé en ce que** des buses (34) d'air chaud accélèrent le séchage de la biomasse.

9. Dispositif selon la revendication 1 **caractérisé en ce que** le fond mouvant possède un réservoir (1) en amont.

10. Dispositif selon la revendication 9 **caractérisé en ce que** ce réservoir possède un tambour de dosage (3).

11. Dispositif selon la revendication 10 **caractérisé en ce que** ce tambour est réglable en hauteur à l'aide de son axe (7) vissé dans la structure du réservoir et de la face amovible (9) permettant la réhausse du tambour.
